# EUROPÄISCHE PATENTANMELDUNG

(11) **EP 4 400 917 A1**
(43) Veröffentlichungstag der Anmeldung: **17.07.2024**
(21) Anmeldenummer: 23151465.4
(22) Anmeldetag: 13.01.2023
(51) Int. Cl.: G05B 9/02, F16P 3/14, G07C 9/00, G07C 9/20, G05B 19/406

(54) **SICHERHEITSEINRICHTUNG UND VERFAHREN ZUM BETRIEB EINER SICHERHEITSEINRICHTUNG**

(71) Anmelder: EUCHNER GmbH + Co. KG, 70771 Leinfelden-Echterdingen (DE)
(72) Erfinder: Keller, Fabian, 72631 Aichtal (DE); Schmid, Dominik, 72663 Großbettlingen (DE)
(74) Vertreter: Ruckh, Rainer Gerhard

(57) **Zusammenfassung**

Die Erfindung betrifft eine Sicherheitseinrichtung (1) und ein Verfahren zum Betrieb einer Sicherheitseinrichtung (1) mit einem Sicherheitsgerät (2), dessen Komponenten mittels einer fehlersicheren Steuer- und Auswerteeinheit (5) kontrolliert und gesteuert werden. Ein Endgerät ist vorhanden, wobei zwischen dem Endgerät und dem Sicherheitsgerät (2) eine bidirektionale Datenübertragung (17) so durchgeführt werden kann, dass vom Endgerät Authentifizierungsdaten an das Sicherheitsgerät (2) übertragen werden. Durch eine fehlersichere Auswertung der Authentifizierungsdaten wird das Endgerät authentifiziert. Eine im Endgerät eingegebene Folge von Benutzerangaben wird an das Sicherheitsgerät (2) übertragen, die in der Steuer- und Auswerteeinheit (5) mit einer Sollfolge von Benutzereingaben fehlersicher verglichen wird. In der Steuer- und Auswerteeinheit (5) wird eine Sicherheitsfunktion nur dann freigegeben oder aktiviert, wenn die eingegebene Folge von Benutzereingaben mit der Sollfolge übereinstimmt.

## Beschreibung

Die Erfindung betrifft eine Sicherheitseinrichtung und ein Verfahren zum Betrieb einer Sicherheitseinrichtung.

Derartige Sicherheitseinrichtungen umfassen wenigstens ein Sicherheitsgerät und werden im Bereich der Sicherheitstechnik, insbesondere im Bereich der Maschinensicherheit eingesetzt. Mit den Sicherheitseinrichtungen wird ein überwachter und damit sicherer Betrieb von Maschinen und Anlagen gewährleistet.

Ein Beispiel für derartige Sicherheitseinrichtungen sind Sicherheitszuhaltesysteme.

Ein derartiges System ist beispielsweise von dem Sicherheitssystem MGB der Firma Euchner gebildet. Dieses Sicherheitssystem gewährleistet ein sicheres Zuhalten von beweglich trennenden Schutzeinrichtungen, insbesondere Schutztüren, und somit einen gesicherten Zugang zu eingezäunten sicherheitskritischen Gefahrenbereichen.

Dieses Sicherheitszuhaltesystem umfasst ein Zuhaltemodul, an welchem ein Griffmodul angeordnet ist. Diese Module dienen zum sicheren Zuhalten der Schutztür. Der Türdrücker des Griffmoduls kann durch Federkraft in zugehaltener Stellung gehalten werden und durch Magnetkraft entsperrt werden. Alternativ kann der Türdrücker durch Magnetkraft in zugehaltener Stellung gehalten werden und durch Federkraft entsperrt werden.

Weiterhin weist das Sicherheitszuhaltesystem ein Tastenmodul mit einem Zustimungstaster auf. Die Freigabe des Betriebs oder einer Betriebsart einer Anlage, die mit der Sicherheitseinrichtung überwacht wird, erfolgt nur dann, wenn ein Benutzer den Zustimmungstaster gedrückt hält.

Das Sicherheitsgerät weist eine Steuer- und Auswerteeinheit auf, in welcher die einzelnen Komponenten fehlersicher gesteuert werden. Auch erfolgt dort eine fehlersichere Auswertung von Signalen der Komponenten des Sicherheitsgeräts. Abhängig hiervon generiert die Steuer- und Auswerteeinheit Ausgangssignale, die über Ausgänge an die überwachte Anlage ausgegeben werden, insbesondere, um deren Betrieb freizugeben oder zu sperren.

Der Erfindung liegt die Aufgabe zugrunde eine Sicherheitseinrichtung bereitzustellen, die bei hoher Fehlersicherheit einen flexibel gestaltbaren modularen Aufbau aufweist.

Zur Lösung dieser Aufgabe sind die Merkmale der unabhängigen Ansprüche beschrieben. Vorteilhafte Ausführungsformen und zweckmäßige Weiterbildungen der Erfindung sind in den abhängigen Ansprüchen beschrieben.

Die Erfindung betrifft eine Sicherheitseinrichtung mit einem Sicherheitsgerät, dessen Komponenten mittels einer fehlersicheren Steuer- und Auswerteeinheit kontrolliert und gesteuert werden. Ein Endgerät ist vorhanden, wobei zwischen dem Endgerät und dem Sicherheitsgerät eine bidirektionale Datenübertragung so durchgeführt werden kann, dass vom Endgerät Authentifizierungsdaten an das Sicherheitsgerät übertragen werden. Durch eine fehlersichere Auswertung der Authentifizierungsdaten wird das Endgerät authentifiziert. Eine im Endgerät eingegebene Folge von Benutzerangaben wird an das Sicherheitsgerät übertragen, die in der Steuer- und Auswerteeinheit mit einer Sollfolge von Benutzereingaben fehlersicher verglichen wird. Die in der Steuer- und Auswerteeinheit generierte Sicherheitsfunktion wird nur dann freigegeben oder aktiviert, wenn die eingegebene Folge von Benutzereingaben mit der Sollfolge übereinstimmt.

Die Erfindung betrifft weiterhin ein Verfahren zum Betrieb einer Sicherheitseinrichtung.

Die erfindungsgemäße Sicherheitseinrichtung weist in an sich bekannter Weise ein Sicherheitsgerät auf, das einen fehlersicheren Aufbau aufweist, wodurch das Sicherheitsgerät entsprechend fehlersichere Ausgangssignale generiert.

Das Sicherheitsgerät der erfindungsgemäßen Sicherheitseinrichtung kann vorteilhaft von einem Sicherheitszuhaltesystem gebildet sein. Jedoch ist die Sicherheitseinrichtung hierauf nicht beschränkt. Vielmehr kann die Sicherheitseinrichtung auch andere Sicherheitsgeräte umfassen, wie z.B. Sicherheitsschalter, Busmodule, Zugangskontrollsysteme oder Sicherheitsgeräte zur Auswahl von Betriebsarten eines Sicherheitssystems.

Die Fehlersicherheit des Sicherheitsgeräts wird insbesondere durch eine Steuer- und Auswerteeinheit mit einem fehlersicheren Aufbau realisiert, welche die Komponenten des Sicherheitsgeräts kontrolliert und steuert. Insbesondere erfolgt in der Steuer- und Auswerteeinheit eine Auswertung von Signalen der einzelnen Komponenten, um in Abhängigkeit hiervon Ausgangssignale zu generieren.

Die Fehlersicherheit der Steuer- und Auswerteeinheit kann insbesondere durch eine mehrkanalige Rechnerstruktur realisiert werden, bei der einzelne Rechnerkanäle in Form von Hardware- und/oder Softwarestrukturen sich gegenseitig überwachen.

Besonders vorteilhaft weist die Steuer- und Auswerteeinheit zwei sich gegenseitig zyklisch überwachende Rechnereinheiten auf.

Erfindungsgemäß ist in die Sicherheitseinrichtung ein Endgerät miteinbezogen. Der Grundgedanke der Erfindung besteht darin, dass mittels des Endgeräts eine Sicherheitsfunktion fehlersicher generiert werden kann, obwohl das Endgerät selbst nicht fehlersicher ist.

Mit dem Endgerät können damit Sicherheitsfunktionen realisiert werden, wodurch der Funktionsumfang der Sicherheitseinrichtung erweitert wird, ohne dass hierfür zusätzliche Komponenten, insbesondere zusätzliche Hardware, im Sicherheitsgerät vorgesehen werden muss. Der Aufbau des Sicherheitsgeräts kann damit einfach und kompakt umgestaltet sein. Weiter vorteilhaft ist, dass die Endgeräte nicht fehlersichere Standardgeräte sind, die bei Benutzern üblicherweise vorhanden sind. Dies gilt insbesondere für mobile Endgeräte, wie Smartphones. Der Einsatz von Endgeräten stellt somit keinen konstruktiven Mehraufwand dar.

Das Endgerät kann dabei z.B. ein herkömmlicher PC sein. Besonders vorteilhaft ist das Endgerät ein mobiles Endgerät wie z.B. ein Smartphone, ein Tablet oder dergleichen. Derartige Endgeräte weisen generell einkanalige Prozessorsysteme auf. Weiterhin sind keine Maßnahmen zur Fehleraufdeckung vorgesehen, wie z.B. Selbsttests. Derartige Endgeräte sind daher nicht fehlersicher.

Das Grundkonzept der Erfindung besteht darin, das Endgerät durch Mittel zur bidirektionalen Datenübertragung an das Sicherheitsgerät anzubinden und in der Steuer- und Auswerteeinheit des Sicherheitsgeräts Daten, die vom Endgerät an das Sicherheitsgerät übertragen werden, fehlersicher auszuwerten.

Vorteilhaft werden zwischen dem Sicherheitsgerät und dem Endgerät Funksignale übertragen.

Dabei kann insbesondere eine Bluetooth- oder WLAN-Verbindung vorgesehen sein.

In einem ersten Schritt erfolgt die Authentifizierung des Endgeräts durch die Steuer- und Auswerteeinheit. Hierzu überträgt das Endgerät Authentifizierungsdaten an das Sicherheitsgerät.

Vorteilhaft werden Authentifizierungsdaten über eine NFC-Schnittstelle vom Endgerät an das Sicherheitsgerät gesendet.

Die Authentifizierungsdaten bilden allgemein Nutzerkennungen, die insbesondere in Form von Codes vorliegen, wobei das Endgerät anhand dieser Authentifizierungsdaten eindeutig identifizierbar ist. Hierzu können die Authentifizierungsdaten vom Sicherheitsgerät an einen Server ausgelesen werden, der die Identifikation und Prüfung der Authentifizierungsdaten vornimmt. Alternativ kann in der Steuer- und Auswerteeinheit des Sicherheitsgeräts selbst eine Anzahl von zulässigen Endgeräten mit hierzu korrespondierenden Authentifizierungsdaten abgespeichert werden, so dass dann die Identifikation eines Endgeräts lokal im Sicherheitsgerät durch Vergleichen eingelesener Authentifizierungsdaten mit abgespeicherten Authentifizierungsdaten erfolgen kann.

Um das Endgerät an das Sicherheitsgerät anzukoppeln und in die Sicherheitseinrichtung einzubeziehen, werden vorteilhaft von dem Sicherheitsgerät Konfigurationsdaten an eine App des Endgeräts gesendet.

Die Konfigurationsdaten umfassen Parameter, die den Funktionsumfang des Sicherheitsgeräts definieren. Durch das Übertragen dieser Konfigurationsdaten in die App des Endgeräts ist dort der Funktionsumfang des Sicherheitsgeräts bekannt.

Erfindungsgemäß kann dann durch Benutzereingaben im Endgerät, die in der Steuer- und Auswerteeinheit fehlersicher ausgewertet werden, in der Steuer- und Auswerteeinheit eine Sicherheitsfunktion entsprechend fehlersicher generiert werden.

Erfindungsgemäß muss dabei ein Benutzer eine Folge von Benutzereingaben am Endgerät tätigen. Diese werden schrittweise in die Steuer- und Auswerteeinheit eingelesen und dort fehlersicher geprüft, indem sie mit dort abgespeicherten Sollfolgen verglichen werden. Nur wenn die eingegebene Folge von Benutzereingaben für jeden Schritt mit der abgespeicherten Sollfolge übereinstimmt, wird die Sicherheitsfunktion in der Steuer- und Auswerteeinheit freigegeben bzw. generiert.

Für den Fall, dass die Sicherheitseinrichtung zur Überwachung einer Anlage dient, ist vorteilhaft die Sicherheitsfunktion ein Freigabesignal, mit dem der Betrieb oder ein bestimmter Betriebsmodus der Anlage freigegeben wird. Insbesondere kann auf diese Weise die Funktion eines Zustimmungstasters nachgebildet werden. Der Hardwareaufwand für eine Ausbildung eines Zustimmungstasters am Sicherheitsgerät kann damit eingespart werden.

Vorteilhaft weist dabei das Endgerät eine Eingabeeinheit mit einem Display auf, an welcher die Folge von Benutzereingaben eingegeben wird, wobei die Benutzerangaben am Display angezeigt werden.

Der Benutzer kann dann am Display die von ihm getätigten Benutzereingaben verfolgen und überprüfen.

Die Folge der zu tätigenden Benutzereingaben wird vom Benutzer am Display vorteilhaft ebenfalls angezeigt. Die nacheinander zu tätigenden Benutzereingaben werden durch die Steuer- und Auswerteeinheit vorgegeben. Jede getätigte Benutzereingabe wird dann in der Steuer- und Auswerteeinheit fehlersicher kontrolliert.

Besonders vorteilhaft muss mit den Benutzereingaben eine geometrische Figur in vorgegebenen Schritten in vorgegebenen Zeitintervallen an der Eingabeeinheit eingegeben werden, damit die Sicherheitsfunktion freigegeben oder aktiviert wird.

Insbesondere wird auf dem Display eine in Sollfelder unterteilte geometrische Figur angezeigt, wobei mit den Benutzereingaben die Sollfelder in einer vorgegebenen Reihenfolge und in vorgegebenen Zeitintervallen markiert werden müssen, damit die Sicherheitsfunktion freigegeben oder aktiviert wird.

Durch die schrittweise Vorgabe von zu tätigenden Benutzereingaben, die dann schrittweise fehlersicher in der Steuer- und Auswerteeinheit überprüft werden, wird eine hohe Fehler- und Manipulationssicherheit bei den Eingaben am Endgerät erzielt.

Diesem Überprüfungsverfahren ist vorteilhaft ein sensorisch überwachtes Überprüfungsverfahren vorgelagert.

Dementsprechend ist eine Voraussetzung für eine Freigabe oder Aktivierung der Sicherheitsfunktion, dass mit Sensoren des Endgeräts vorgegebene Benutzereingaben am Endgerät registriert werden, wobei Sensorsignale des Endgeräts an das Sicherheitsgerät übertragen und in der Steuer- und Auswerteeinheit kontrolliert werden.

Mit den Sensoren des Endgeräts wird damit kontrolliert, ob ein Benutzer bestimmte Benutzereingaben vornimmt, was anhand der vom Endgerät an das Sicherheitsgerät übertragenen Sensorsignale in der Steuer- und Auswerteeinheit durch Vergleiche mit Sollwertvorgaben fehlersicher geprüft wird.

Diese weitere Überwachung des Endgeräts führt zu einer weiteren Erhöhung der Fehlersicherheit der Sicherheitseinrichtung.

Vorteilhaft ist als Sensor das Display der Eingabeeinheit des Endgeräts vorgesehen, an welchem ein Benutzer eine vorgegebene Solleingabe als Voraussetzung für eine Freigabe oder Aktivierung der Sicherheitsfunktion eingeben muss.

Der Benutzer muss beispielsweise einen bestimmten Punkt am Display halten, was in der Steuer- und Auswerteeinheit fehlersicher überprüft wird.

Vorteilhaft sind zusätzlich als Sensoren ein Gyroskopsensor und/oder ein Magnetometer vorgesehen, deren Signale in der Steuer- und Auswerteeinheit mit Sollwerten verglichen werden.

Mit diesen Sensoren wird geprüft, ob der Benutzer das Endgerät, insbesondere das mobile Endgerät, in einer bestimmten Soll-Lage hält. Das Halten des mobilen Endgeräts in einer bestimmten Lage stellt ebenfalls eine Benutzereingabe dar, die in der Steuer- und Auswerteeinheit fehlersicher geprüft werden.

Generell wird somit mit den Sensoren des Endgeräts eine Folge von Benutzereingaben erfasst. Durch Einlesen der Sensorsignale der Sensoren des Endgeräts in das Sicherheitsgerät wird in der Steuer- und Auswerteeinheit geprüft, ob die Folge der sensorisch überwachten Benutzereingabe mit einer in der Steuer- und Auswerteeinheit gespeicherten Sollfolge übereinstimmt. Nur wenn dies der Fall ist, erfolgt in der Steuer- und Auswerteeinheit eine Freigabe des Betriebs einer Anlage.

Die Erfindung wird im Folgenden anhand der Zeichnungen erläutert.
- Figur 1:: Schematische Darstellung eines Ausführungsbeispiels der erfin-dungsgemäßen Sicherheitseinrichtung mit einem Sicherheitsgerät und einem mobilen Endgerät.
- Figur 2:: Blockschaltbild des Sicherheitsgeräts gemäß Figur 1.
- Figur 3:: Blockschaltbild des mobilen Endgeräts gemäß Figur 1.
- Figur 4a:: Beispiel einer auf dem mobilen Endgerät dargestellten geometrischen Figur.
- Figur 4b:: Geometrische Figur gemäß Figur 4a mit durch Benutzereingaben vorgenommene Markierungen.

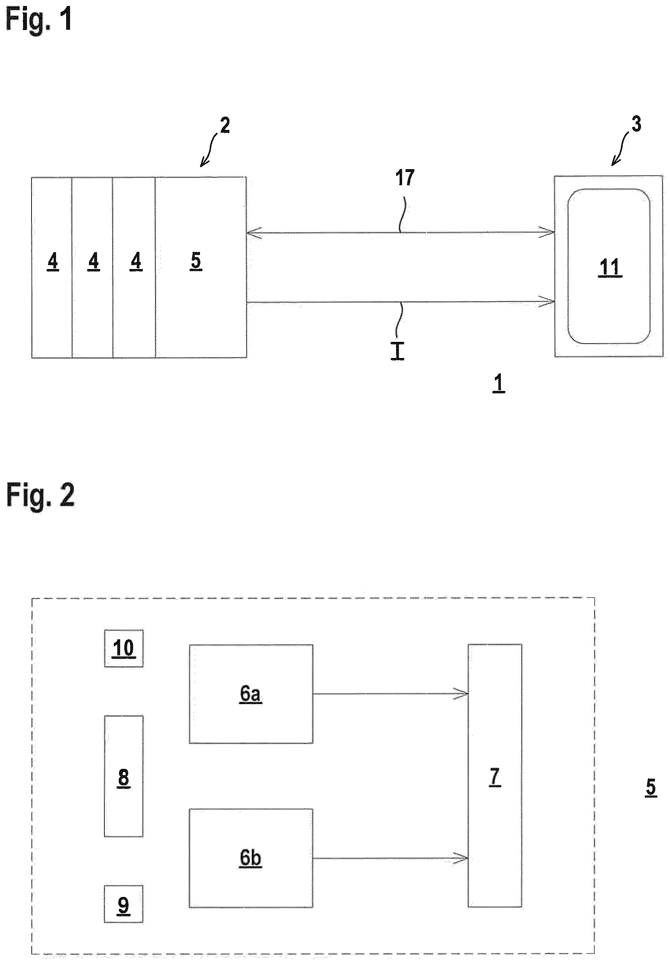

Figur 1 zeigt ein Ausführungsbeispiel der erfindungsgemäßen Sicherheitseinrichtung 1. Die Sicherheitseinrichtung 1 umfasst ein Sicherheitsgerät 2 und ein Endgerät, das im vorliegenden Fall als mobiles Endgerät 3 ausgebildet ist. Das mobile Endgerät 3 ist im vorliegenden Fall von einem Smartphone gebildet.

Das Sicherheitsgerät 2 kann generell von einem Sicherheitsschalter, einem Zugangskontrollsystem oder als Sicherheitsgerät 2 zur Auswahl von Betriebsarten eines Sicherheitssystems ausgebildet sein. Weiterhin kann das Sicherheitsgerät 2 auch ein Busmodul sein.

Im vorliegenden Fall bildet das Sicherheitsgerät 2 ein Sicherheitszuhaltesystem aus.

Das Sicherheitszuhaltesystem gewährleistet ein sicheres Zuhalten einer trennenden Schutzeinrichtung, wie z.B. einer Schutztür, und weist hierzu eine Anzahl von Modulen 4 auf. Das Sicherheitsgerät 2 umfasst dabei ein Zuhaltemodul, welches stationär an einem Rahmen oder dergleichen angeordnet ist, sowie ein an der Schutztür angeordnetes Griffmodul, welches mit der Schutztür bewegt werden kann. Das Zuhaltemodul hält die Schutztür sicher im geschlossenen Zustand und bewirkt somit eine Sicherung zu einem Gefahrenbereich an einer Anlage, wobei der Begriff Anlage auch Maschinen und dergleichen umfasst.

Das Sicherheitsgerät 2 umfasst weiterhin Module 4 in Form von Bedienelementen, mittels denen Funktionen des Sicherheitsgeräts 2 einstellbar sind.

Das Sicherheitsgerät 2 umfasst weiterhin eine Steuer- und Auswerteeinheit 5, die zur Kontrolle und Steuerung der Module 4 dient. Dabei weist die Steuer- und Auswerteeinheit 5 einen fehlersicheren Aufbau auf.

Figur 2 zeigt beispielhaft den Aufbau der Steuer- und Auswerteeinheit 5 des Sicherheitsgeräts 2 gemäß Figur 1. Die Fehlersicherheit der Steuer- und Auswerteeinheit 5 wird durch zwei sich gegenseitig zyklisch überwachende Rechnereinheiten in Form von Prozessoren 6a, 6b erreicht. Die Prozessoren 6a, 6b steuern eine sichere Ausgangsstufe 7 mit wenigstens einem Ausgang an, über welche in den Prozessoren 6a, 6b generierte Ausgangssignale ausgegeben werden. Die Fehlersicherheit der Ausgangsstufe 7 kann z.B. dadurch erreicht werden, dass angegebene Ausgangssignale in die Prozessoren 6a, 6b rückgelesen und dort mit vorgegebenen Erwartungshaltungen verglichen werden.

Die Steuer- und Auswerteeinheit 5 weist weiterhin eine Speichereinheit 8 auf, in welcher Konfigurationsdaten des Sicherheitsgeräts 2 gespeichert sind. Beide Prozessoren 6a, 6b haben Zugriff auf die in der Speichereinheit 8 gespeicherten Konfigurationsdaten.

Schließlich weist die Steuer- und Auswerteeinheit 5 eine Funkschnittstelle 9 und eine NFC-Leseeinheit 10 auf.

Das mobile Endgerät 3 weist in bekannter Weise ein Display 11 auf (Figur 1).

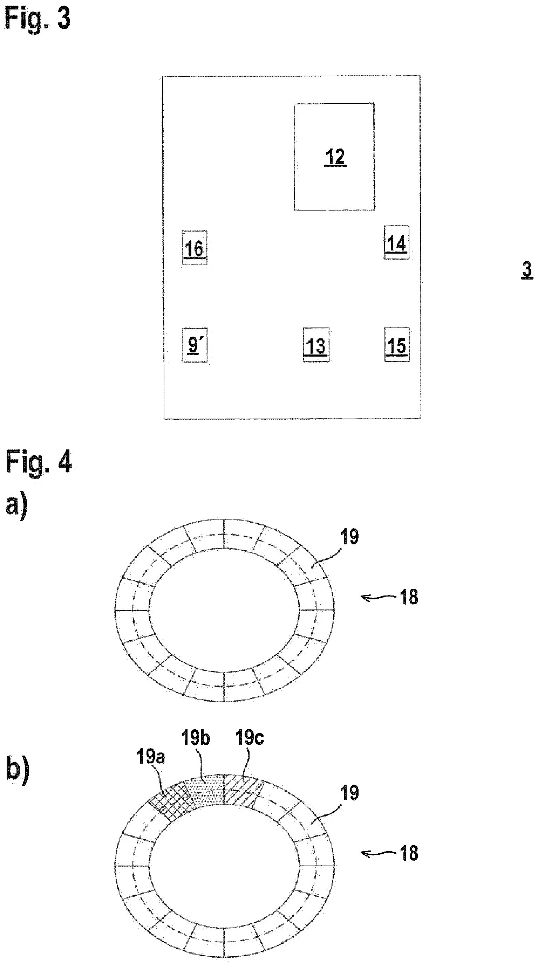

Weiterhin weist das mobile Endgerät 3 einen Prozessor 12 auf, der die Funktionen des mobilen Endgeräts 3 steuert (Figur 3). Das mobile Endgerät 3 weist keinen fehlersicheren Aufbau auf, insbesondere bildet der Prozessor 12 eine einkanalige Rechnerstruktur.

Das mobile Endgerät 3 weist Sensormittel 13 zur Erfassung von Eingaben auf dem Display 11 auf. Weiterhin weist das mobile Endgerät 3 einen Gyroskopsensor 14 zur Erfassung der Lage des mobilen Endgeräts 3 im Raum auf. Zudem weist das mobile Endgerät 3 als Magnetkompass ein Magnetometer 15 auf.

Zur Kommunikation mit externen Einheiten weist das mobile Endgerät 3 eine Funkschnittstelle 9' und ein NFC-Schnittstellenelement 16 auf.

Über die Funkschnittstellen 9, 9' erfolgt eine bidirektionale Datenübertragung 17 zwischen dem Sicherheitsgerät 2 und dem mobilen Endgerät 3 (Figur 1). Die Datenübertragung kann per Bluetooth oder WLAN erfolgen.

Die Funktionsweise der erfindungsgemäßen Sicherheitseinrichtung 1 ist wie folgt.

Zunächst sendet das mobile Endgerät 3 über das NFC-Schnittstellenelement 16 Authentifizierungsdaten an das Sicherheitsgerät 2, die mit der NFC-Leseeinheit 10 in der Steuer- und Auswerteeinheit 5 gelesen werden. Anhand der Authentifizierungsdaten wird das mobile Endgerät 3 in der Steuer- und Auswerteeinheit 5 eindeutig identifiziert. Wird weiterhin das mobile Endgerät 3 als gültig erkannt, beispielsweise anhand einer in der Steuer- und Auswerteeinheit 5 oder in einem zugeordneten Server hinterlegten Nutzerkennungen für verschiedene mobile Endgeräte 3.

Nachdem das mobile Endgerät 3 in der Steuer- und Auswerteeinheit 5 identifiziert und als gültig klassifiziert wurde, sendet die Steuer- und Auswerteeinheit 5 die Konfigurationsdaten des Sicherheitsgeräts 2, die in der Speichereinheit 8 hinterlegt sind, per Funk (Pfeil I in Figur 1) an das mobile Endgerät 3, wobei sie dort in einer App gespeichert werden, so dass die Konfiguration des Sicherheitsgeräts 2 im mobilen Endgerät 3 bekannt ist. Damit ist das mobile Endgerät 3 in die Sicherheitseinrichtung 1 mit einbezogen.

Erfindungsgemäß kann durch eine Folge von Benutzereingaben, die ein Benutzer am mobilen Endgerät 3 tätigt, und welche in der Steuer- und Auswerteeinheit 5 fehlersicher geprüft wird, in der Steuer- und Auswerteeinheit 5 eine Sicherheitsfunktion generiert bzw. freigegeben werden.

Im vorliegenden Fall wird durch die Benutzereingabe eine Sicherheitsfunktion generiert, die einer Betätigung eines Zustimmungstasters entspricht. Das mobile Endgerät 3 ersetzt somit die entsprechenden Zustimmungstaster, da durch die Benutzereingabe am mobilen Endgerät 3 als Sicherheitsfunktion ein Freigabesignal für die mit der Sicherheitseinrichtung 1 überwachte Anlage generiert wird.

Als Voraussetzung dafür, dass mit dem mobilen Endgerät 3 die Sicherheitsfunktion generiert werden kann, wird eine Folge von Benutzereingaben mit im mobilen Endgerät 3 vorhandenen Sensoren überwacht, wobei die entsprechenden Sensorsignale der Sensoren in der Steuer- und Auswerteeinheit 5 fehlersicher ausgewertet werden.

Im vorliegenden Fall muss ein Benutzer einen bestimmten Punkt am Display 11 des mobilen Endgeräts 3 berühren und halten, wobei hierzu am Display 11 der entsprechende Punkt angezeigt werden kann.

Gleichzeitig wird mit dem Gyroskopsensor 14 und/oder dem Magnetometer 15 geprüft, ob der Benutzer das mobile Endgerät 3 in einer bestimmten Lage hält. Auch das Halten des mobilen Endgeräts 3 in einer bestimmten Lage stellt eine Benutzereingabe dar.

In der Steuer- und Auswerteeinheit 5 wird geprüft, ob die erfasste Lage des mobilen Endgeräts 3 innerhalb vorgegebener Toleranzen übereinstimmt.

Nur wenn diese Bedingungen erfüllt sind, wird die Freigabe zur Generierung einer Sicherheitsfunktion mittels des mobilen Endgeräts 3 erteilt.

Damit die Sicherheitsfunktion letztlich freigegeben oder generiert wird, muss der Benutzer am Display 11 eine Folge von Benutzereingaben eingeben, wobei in der Steuer- und Auswerteeinheit 5 geprüft wird, ob die Benutzereingabe innerhalb einer vorgegebenen Reihenfolge am Display 11 eingegeben werden. Zudem wird geprüft, ob die aufeinanderfolgenden Benutzereingaben jeweils innerhalb vorgegebener Zeitintervalle getätigt werden. Nur wenn dies der Fall ist, wird die Sicherheitsfunktion in der Steuer- und Auswerteeinheit 5 generiert.

Ein entsprechendes Ausführungsbeispiel zeigen die Figuren 4a und 4b. Figur 4a zeigt eine geometrische Figur 18 in Form eines Kreises, die am Display 11 angezeigt wird. Der Kreis ist in eine Anzahl von Sollfeldern 19 unterteilt.

Ein Benutzer muss die einzelnen Sollfelder 19 nacheinander antippen und markieren, wobei die Soll-Reihenfolge von der Steuer- und Auswerteeinheit 5 vorgegeben und am Display 11 angezeigt wird, wie in Figur 4b veranschaulicht.

Um dem Nutzer die Reihenfolge der zu markierenden Sollfelder 19 anzuzeigen, wird, insbesondere in unterschiedlichen Farben, das zuletzt markierte Feld 19a, das aktuell markierte Feld 19b und das als nächstes zu markierende Feld 19c angezeigt.

So weiß der Benutzer in welcher Reihenfolge er die Sollfelder 19 markieren muss. Nur wenn der Benutzer die Sollfelder 19 innerhalb vorgegebener Zeitintervalle in der vorgegebenen Reihenfolge eingibt, wird die Sicherheitsfunktion aktiviert.

Ansonsten wird der Vorgang zur Generierung der Sicherheitsfunktion abgebrochen, so dass das Sicherheitsgerät 2 in keinen unsicheren Zustand überführt wird.

### Bezugszeichenliste

- (1): Sicherheitseinrichtung
- (2): Sicherheitsgerät
- (3): mobiles Endgerät
- (4): Modul
- (5): Steuer- und Auswerteeinheit
- (6a): Prozessor
- (6b): Prozessor
- (7): Ausgangsstufe
- (8): Speichereinheit
- (9): Funkschnittstelle
- (9'): Funkschnittstelle
- (10): NFC-Leseeinheit
- (11): Display
- (12): Prozessor
- (13): Sensormittel
- (14): Gyroskopsensor
- (15): Magnetometer
- (16): NFC-Schnittstellenelement
- (17): Datenübertragung
- (18): Figur
- (19): Sollfeld
- (19a): Feld
- (19b): Feld
- (19c): Feld

- (I): Pfeil

## Patentansprüche

1. Sicherheitseinrichtung (1) mit einem Sicherheitsgerät (2), dessen Komponenten mittels einer fehlersicheren Steuer- und Auswerteeinheit (5) kontrolliert und gesteuert werden, **dadurch gekennzeichnet, dass** ein Endgerät vorhanden ist, wobei zwischen dem Endgerät und dem Sicherheitsgerät (2) eine bidirektionale Datenübertragung (17) durchgeführt werden kann, dass vom Endgerät Authentifizierungsdaten an das Sicherheitsgerät (2) übertragen werden, wobei durch eine fehlersichere Auswertung der Authentifizierungsdaten das Endgerät authentifiziert wird, und dass eine im Endgerät eingegebene Folge von Benutzerangaben an das Sicherheitsgerät (2) übertragen und in der Steuer- und Auswerteeinheit (5) mit einer Sollfolge von Benutzereingaben fehlersicher verglichen wird, und dass die Steuer- und Auswerteeinheit (5) eine Sicherheitsfunktion nur dann freigibt oder aktiviert, wenn die eingegebene Folge von Benutzereingaben mit der Sollfolge übereinstimmt.

2. Sicherheitseinrichtung (1) nach Anspruch 1, **dadurch gekennzeichnet, dass** die Steuer- und Auswerteeinheit (5) eine fehlersichere mehrkanalige Rechnerstruktur aufweist.

3. Sicherheitseinrichtung (1) nach Anspruch 2, **dadurch gekennzeichnet, dass** die Steuer- und Auswerteeinheit (5) zwei sich gegenseitig zyklisch überwachende Rechnereinheiten aufweist.

4. Sicherheitseinrichtung (1) nach einem der Ansprüche 1 bis 3, **dadurch gekennzeichnet, dass** das Endgerät ein mobiles Endgerät ist.

5. Sicherheitseinrichtung (1) nach einem der Ansprüche 1 bis 4, **dadurch gekennzeichnet, dass** das Endgerät nicht fehlersicher ist.

6. Sicherheitseinrichtung (1) nach einem der Ansprüche 1 bis 5, **dadurch gekennzeichnet, dass** zwischen dem Sicherheitsgerät (2) und dem Endgerät Funksignale übertragen werden.

7. Sicherheitseinrichtung (1) nach einem der Ansprüche 1 bis 6, **dadurch gekennzeichnet, dass** von dem Sicherheitsgerät (2) Konfigurationsdaten an eine App des Endgeräts gesendet werden.

8. Sicherheitseinrichtung (1) nach einem der Ansprüche 1 bis 7, **dadurch gekennzeichnet, dass** Authentifizierungsdaten über eine NFC-Schnittstelle vom Endgerät an das Sicherheitsgerät (2) gesendet werden.

9. Sicherheitseinrichtung (1) nach einem der Ansprüche 1 bis 8, **dadurch gekennzeichnet, dass** das Endgerät eine Eingabeeinheit mit einem Display (11) aufweist, an welcher die Folge von Benutzereingaben eingegeben wird, wobei die Benutzerangaben am Display (11) angezeigt werden.

10. Sicherheitseinrichtung (1) nach Anspruch 9, **dadurch gekennzeichnet, dass** mit den Benutzereingaben eine geometrische Figur (18) in vorgegebenen Schritten in vorgegebenen Zeitintervallen an der Eingabeeinheit eingegeben werden muss, damit die Sicherheitsfunktion freigegeben oder aktiviert wird.

11. Sicherheitseinrichtung (1) nach Anspruch 10, **dadurch gekennzeichnet, dass** auf dem Display (11) eine in Sollfelder (19) unterteilte geometrische Figur (18) angezeigt wird, wobei mit den Benutzereingaben die Sollfelder (19) in einer vorgegebenen Reihenfolge und in vorgegebenen Zeitintervallen markiert werden müssen, damit die Sicherheitsfunktion freigegeben oder aktiviert wird.

12. Sicherheitseinrichtung (1) nach einem der Ansprüche 1 bis 11, **dadurch gekennzeichnet, dass** eine Voraussetzung für eine Freigabe oder Aktivierung der Sicherheitsfunktion ist, dass mit Sensoren des Endgeräts erfasste Benutzereingaben am Endgerät registriert werden, wobei Sensorsignale des Endgeräts an das Sicherheitsgerät (2) übertragen und in der Steuer- und Auswerteeinheit (5) kontrolliert werden.

13. Sicherheitseinrichtung (1) nach einem der Ansprüche 9 und 12, **dadurch gekennzeichnet, dass** als Sensor das Display (11) der Eingabeeinheit des Endgeräts vorgesehen ist, an welchem ein Benutzer eine vorgegebene Solleingabe als Voraussetzung für eine Freigabe oder Aktivierung der Sicherheitsfunktion eingeben muss.

14. Sicherheitseinrichtung (1) nach einem der Ansprüche 12 oder 13, **dadurch gekennzeichnet, dass** als Sensoren ein Gyroskopsensor (14) und/oder ein Magnetometer (15) vorgesehen sind, deren Signale in der Steuer- und Auswerteeinheit (5) mit Sollwerten verglichen werden.

15. Sicherheitseinrichtung (1) nach einem der Ansprüche 1 bis 14, **dadurch gekennzeichnet, dass** die Sicherheitsfunktion ein Freigabesignal für den Betrieb einer Anlage ist.

16. Verfahren zum Betrieb einer Sicherheitseinrichtung (1) mit einem Sicherheitsgerät (2), dessen Komponenten mittels einer fehlersicheren Steuer- und Auswerteeinheit (5) kontrolliert und gesteuert werden, **dadurch gekennzeichnet, dass** ein Endgerät vorhanden ist, wobei zwischen dem Endgerät und dem Sicherheitsgerät (2) eine bidirektionale Datenübertragung (17) durchgeführt werden kann, dass vom Endgerät Authentifizierungsdaten an das Sicherheitsgerät (2) übertragen werden, wobei durch eine fehlersichere Auswertung der Authentifizierungsdaten das Endgerät authentifiziert wird und dass eine im Endgerät eingegebene Folge von Benutzerangaben an das Sicherheitsgerät (2) übertragen und in der Steuer- und Auswerteeinheit (5) mit einer Sollfolge von Benutzereingaben fehlersicher verglichen wird, und dass die Steuer- und Auswerteeinheit (5) eine Sicherheitsfunktion nur dann freigibt oder aktiviert, wenn die eingegebene Folge von Benutzereingaben mit der Sollfolge übereinstimmt.
